(19)

**Europäisches Patentamt**
**European Patent Office**
**Office européen des brevets**

(11)　**EP 3 819 654 B1**

(12)　# EUROPEAN PATENT SPECIFICATION

(45) Date of publication and mention
of the grant of the patent:
**07.06.2023　Bulletin 2023/23**

(21) Application number: **19208036.4**

(22) Date of filing: **08.11.2019**

(51) International Patent Classification (IPC):
*G01S 1/70* *(2006.01)*　　*G01S 3/783* *(2006.01)*
*G01S 5/16* *(2006.01)*　　*G08G 5/02* *(2006.01)*
*B64F 1/20* *(2006.01)*

(52) Cooperative Patent Classification (CPC):
**G01S 1/7038; G01S 5/16; G08G 5/0026;**
**G08G 5/0069; G08G 5/025;** B64C 39/024;
B64F 1/20; G01S 2201/06; G01S 2205/03

(54) **SYSTEM AND METHOD FOR ENSURING PRECISION LANDING**

SYSTEM UND VERFAHREN ZUR SICHERSTELLUNG EINER PRÄZISIONSLANDUNG

SYSTÈME ET PROCÉDÉ POUR ASSURER UN ATTERRISSAGE DE PRÉCISION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**12.05.2021　Bulletin 2021/19**

(73) Proprietor: **Uavlas Sp. z o.o.**
**00-789 Warszawa (PL)**

(72) Inventor: **KAPACHEUSKI, Yury**
**220059 Minsk (BY)**

(74) Representative: **Michalski Hüttermann & Partner**
**Patentanwälte mbB**
**Kaistraße 16A**
**40221 Düsseldorf (DE)**

(56) References cited:
　**US-A- 3 510 834**　　　**US-A1- 2010 107 429**
　**US-A1- 2019 141 660**

- **KARL ENGELBERT WENZEL ET AL: "Automatic**
**Take Off, Tracking and Landing of a Miniature**
**UAV on a Moving Carrier Vehicle", JOURNAL OF**
**INTELLIGENT AND ROBOTIC SYSTEMS ;**
**THEORY AND APPLICATIONS -**
**(INCORPORATING MECHATRONIC SYSTEMS**
**ENGINEERING), KLUWER ACADEMIC**
**PUBLISHERS, DO, vol. 61, no. 1 - 4, 23 October**
**2010 (2010-10-23), pages 221-238, XP019855701,**
**ISSN: 1573-0409, DOI:**
**10.1007/S10846-010-9473-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to aviation in general and, more particularly, to a system and method for determining dislocation of an aerial vehicle from a predetermined landing place to ensure precision landing by analyzing light emitted by a beacon located at that predetermined landing place.

### DESCRIPTION OF THE RELATED ART

Aerial vehicles, in particular unmanned aerial vehicles of vertical takeoff and landing, must land in a precisely designated place. This place may be, for example, an immovable object, such as a ground surface or a building roof. Also, this place may be, for example, a moving land vehicle, a moving sea vehicle, a moving aerial vehicle.

It is desirable that unmanned aerial vehicles (AV) land without interference of an operator, i.e. automatically.

If global coordinates of a landing place (hereinafter "landing site") are known, an AV may land by determining its position via the GPS. However, accuracy of the Global Positioning System may be insufficient for determining precise coordinates. Furthermore, there may be situations when the GPS system is not available.

An AV may land by using so-called computer vision. In this case, means for capturing space images and determining the AV position on the basis of an analysis of the captured images shall be provided onboard the aerial vehicle (AV). First, such means require high computing power; second, an AV shall be provided with a light sensor array and a photo or video camera, which complicates the AV onboard equipment significantly.

US patent 7039506 discloses a system for determining a line of approach, comprising a ground-based portion and an onboard portion. The ground-based portion is a light-emitting diodes (LEDs) array, wherein the LEDs are divided into four groups. The light emission of each of the four groups is cyclically modulated by a time of light emission of each of the groups. As a result, the receiving portion, depending on its location, registers signals of different duration or different intensity, each of the LEDs operates at one and the same frequency. The receiving portion comprises a light sensor (light detector) and a signal processing device. The signal processing device also comprises a database of calibration composite waveforms to be compared with a composite signal waveform registered by the receiving portion.

Shortcomings of this technical solution are: a database of signal calibration waveforms is required, and the step of comparing received signal waveforms with available calibration waveforms is necessary. Errors and mistakes are possible during the step of comparing received signal waveforms with available calibration waveforms. A modem is required for synchronizing time characteristics of the onboard equipment, which complicates the AV onboard equipment. Duration of formation of a resulting signal will increase, if the LED groups are enlarged. This will result in increase of time required for determining an AV position in space.

US patent 9904283 discloses a precision docking system comprising a ground-based portion and an onboard portion. The ground-based portion comprises a projector configured to project light signals. Each projected pixel is uniquely coded so that a light signal comprises information on the coordinate of each pixel.

Shortcomings of this technical solution include the use of the reflected binary code for encoding the emitted light signals, which compromises the system noise immunity. Furthermore, according to this technical solution, an AV position in space is determined by means of two sensors (light sensors), which makes the onboard portion more complicated.

US 3510834 A describes a system for precision landing of an aircraft onto an aircraft carrier deck.

In KARL ENGELBERT WENZEL ET AL: "Automatic Take Off, Tracking and Landing of a Miniature UAV on a Moving Carrier Vehicle", JOURNAL OF INTELLIGENT AND ROBOTIC SYSTEMS; THEORY AND APPLICATIONS - (INCORPORATING MECHATRONIC SYSTEMS ENGINEERING), KLUWER ACADEMIC PUBLISHERS, DO, vol. 61, no. 1 - 4, October 23, 2010 (2010-10-23), pp. 221-238, XP019855701, ISSN: 1573-0409, DOI: 10.1007 / S10846-010-9473-0 a system for precision landing of the unmanned aerial vehicle is described.

US 2019/141660 A1 describes an object localization system in a room, in the emitting device of which a collecting lens is provided.

The technical solution, as proposed herein, is intended for eliminating the known shortcomings of precision docking systems and methods and providing a simple and reliable system of precision landing and the corresponding method of operating the same.

### SUMMARY OF THE INVENTION

The invention is defined by the features of the independent claims. Preferred embodiments are defined by the features of the dependent claims.

The proposed invention is aimed at solving the task of ensuring an accurate automatic landing of an aerial vehicle of vertical takeoff and landing in a case when it is impossible to use the Global Positioning System (GPS) and/or other known navigation systems.

The proposed invention enables to achieve the following technical effects:

- simplicity and reliability of the receiving portion that is arranged onboard an aerial vehicle;
- reduction in computing power required for processing a signal registered by a light sensor, as compared with the computing power required for processing an image received from a multipixel array;

- reduction in dimensions and weight of equipment to be arranged onboard an aerial vehicle;
- higher accuracy of indication of individual light sources due to modulation of emission from each of said light sources by a unique code;
- better noise immunity of the system;
- increased speed of determining an AV position in space;
- no need for transmission of information from an aerial vehicle to the transmitting portion, since all necessary information is transmitted by the transmitting portion.

The set task is solved, and the technical effects are achieved due to implementation of the proposed method of ensuring precision landing of an aerial vehicle, equipped with a receiving portion, on a landing site, equipped with a transmitting portion, in the following way

a) light emission from at least two projectors of the emitting unit of the transmitting portion is initiated;
b) a signal of the illuminance, including projectors' light emission, is registered by means of the light sensor of the receiving portion;
c) a spectrum of the illuminance of the registered signal is analyzed by means of a data-processing unit of the receiving portion while ensuring determination of the most precisely directed projector among the projectors;
d) dislocation of the receiving portion relative to the most precisely directed projector of the emitting unit of the transmitting portion is calculated according to the following formula:

$$d = \sqrt{\frac{I \cdot \cos a}{E} \cdot \sin a,}$$

where:

I - known intensity of the most precisely directed projector;
E - illuminance (i.e. registered intensity) of the most precisely directed projector;
$a$ - an angle between the direction of the emission intensity maximum of the most precisely directed projector and the normal to the main plane of the emitting unit.

Moreover, in one embodiment of the invention, emission of each projector is modulated so that at any given time all the projectors of the emitting unit operate, and each of the projectors operates at a unique frequency.
In another embodiment of the invention, the projectors are divided into at least two groups, and emission of each of the projectors is modulated so that an emission frequency of each of the projectors is unique for the projectors of the respective group, and at a given time only one of the groups emits, the groups emitting alternately, from the first one to the last one, and this order being repeated cyclically. Furthermore, before every initiation of emission by the first group of the projectors, the emission of all the projectors is modulated so that all the projectors emit at a single frequency during a predetermined time period to form a start frame.

The set task is solved, and the technical effects are achieved also due to provision of a system for ensuring precision landing of an aerial vehicle on a landing site, that comprises a transmitting portion configured to be placed on said landing site and a receiving portion configured to be placed on said aerial vehicle.

The transmitting portion comprises an emitting unit comprising a plurality of projectors arranged in such a way that the direction of emission intensity maximum of a given projector and a normal to the main plane of the emitting unit form an angle a, the angle a increases toward the periphery of the emitting unit; and a control unit comprising a processor and a plurality of projector drivers, the processor being made capable of performing frequency-time modulation of emission by forming projector control signals and sending said signals to the projectors by means of respective drivers. The receiving portion comprises a light sensor configured for registering signals of the emitting unit, and a data processing unit configured for analyzing a spectrum of a signal registered by the light sensor, with determining the most precisely directed projector and determining dislocation $d$ of the receiving portion relative to the most precisely directed projector according to the following formula:

$$d = \sin a \cdot \sqrt{\frac{I \cdot \cos a}{E},}$$

where:

I - known emission intensity of the most precisely directed projector;
E - illuminance (registered intensity) of the most precisely directed projector;
$a$ - an angle between a direction of the emission intensity maximum of the most precisely directed projector and a normal to the main plane of the emitting unit.

The data processing unit comprises two amplifier stages, a high-pass filter, low-pass filters, analog-to-digital converters, a processor for digital processing of signals, and a memory module.

## BRIEF DESCRIPTION OF THE DRAWINGS

FIG. 1 shows a general view of the system transmitting portion.

FIG. 2 shows an arrangement of the transmitting portion at an angle to a landing site.

FIG. 3 shows plan views of variants of locating projectors in the array of the emitting unit.

FIG. 4 shows an arrangement of projectors relative to the main plane.

FIG. 5 shows an optical field formed by the projectors arranged in the array as shown in FIG. 3 and FIG. 4.

FIG. 6 shows formation of an emission cone, or Aperture C, of the emitting unit.

FIG. 7 shows an arrangement of light-emitting diodes which viewing angles overlap.

FIG. 8 shows the main components of the transmitting portion control unit.

FIG. 9 shows how the emitting unit operates when the projectors are divided into groups.

FIG. 10 shows the main components of the receiving portion.

FIG. 11 illustrates determination of dislocation d of the receiving portion from the emitting unit.

FIG. 12 shows one example of determination of the most precisely directed projector.

FIG. 13 shows a position of an aerial vehicle before and after movement by a dislocation magnitude.

## DETAILED DESCRIPTION OF THE INVENTION

The proposed system for ensuring precision landing comprises a transmitting portion and a receiving portion. The transmitting portion is arranged on a landing site, and the receiving portion is arranged onboard an aerial vehicle.

The transmitting portion, or, in other words, the ground-based portion, is, in its essence, a beacon intended for placing on a surface determined for landing of an aerial vehicle. One skilled in the art will understand that the word "ground-based" in this context does not mean arrangement solely on the ground. It should be appreciated that an aerial vehicle may also land on other surfaces, such as a roof of a building, a surface of a moving transport vehicle, a surface of a landing pad on a ship, or even inside a specially designed charging station, etc.

The ground-based portion, or the beacon, is provided with an emitting unit (1) and a control unit (4).

The emitting unit (1) comprises an array of projectors (2) that are arranged in a special way relative to the main plane (3) of the emitting unit. Here, the main plane (3) of the emitting unit may be considered as a relatively flat surface of the emitting unit (1) with projectors (2) installed thereon. When the beacon is to be installed on any landing site, it would be reasonable to determine a position of the main plane (3) of the emitting unit relative to the surface of the landing site. For example, such a position may be determined after knowing an angle y between the main plane (3) of the emitting unit and the surface of the landing site as well as a direction of the main plane (3) of the emitting unit relative to the cardinal points.

It is preferable that the main plane (3) of the emitting unit is essentially parallel to the plane of the landing surface.

Any light emitting elements may be used as projectors. They may be, for example, light emitting elements operated in the UV, or visible, or IR spectrum.

It is preferable that light emitting diodes are used as projectors.

A plurality of projectors (2) in the emitting unit (1) may be arranged in the form of a linear array, then an aerial vehicle position can be determined along the line.

A plurality of projectors (2) in the emitting unit (1) may be arranged in the form of a two-dimensional array, then an aerial vehicle position can be determined according to two coordinates.

The projectors (2) may have a combined arrangement in the emitting unit (1) for determining a position for special tasks.

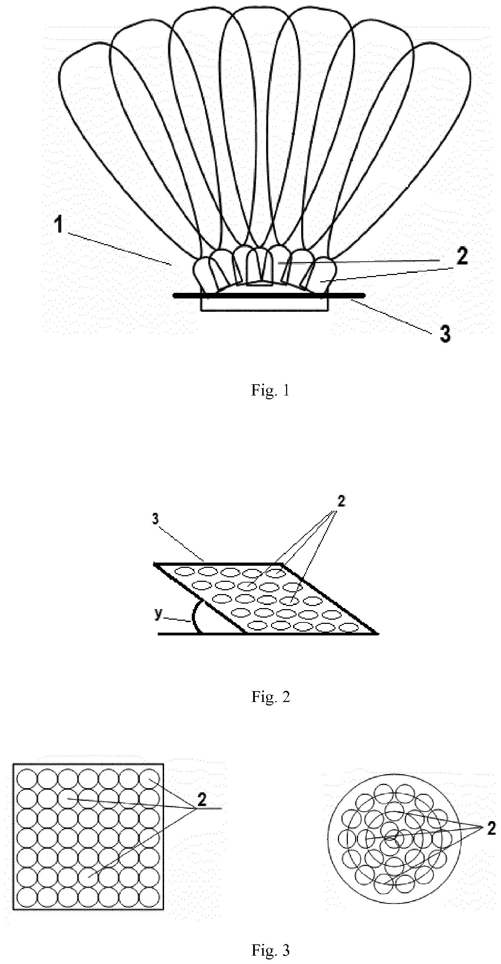

When an array of the projectors (2) is two-dimensional, the projectors (2) may be arranged, in a plan view, in the form of a rectangle, a circle, or randomly (FIG. 3).

It is preferable that the projectors (2) are distributed in an array uniformly and regularly.

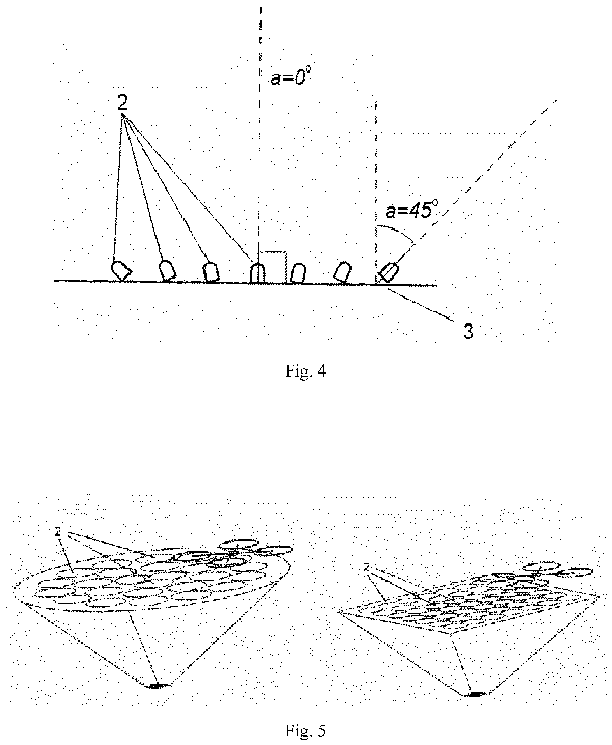

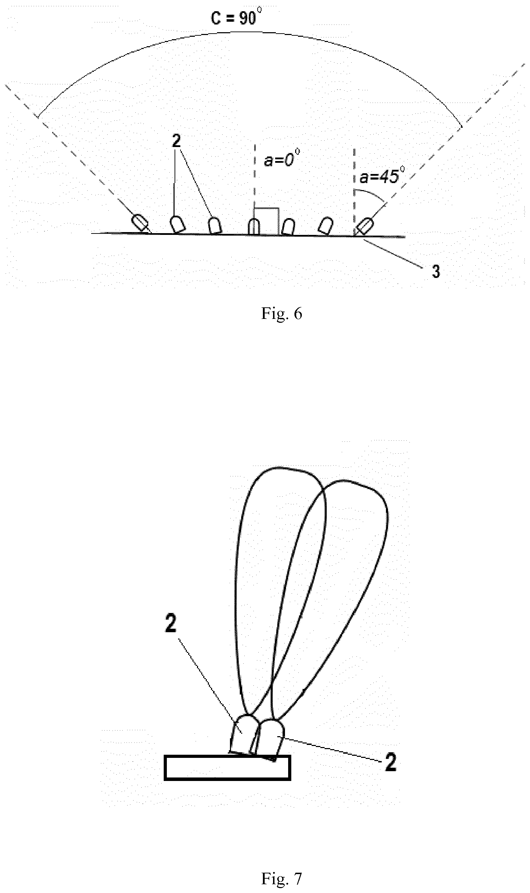

In the planes perpendicular to the main plane (3) of the emitting unit (1), a plurality of the projectors (2) are arranged in such a way that the direction of emission intensity maximum from each projector is the angle $a$ to a normal traced to the main plane (3) of the emitting unit in the installation point of that projector (FIG. 4). It is preferable that the angle $a$ decreases from the periphery of the emitting unit to the center thereof. In other words, the angle $a$ for the projectors located at the edges of the emitting unit is the greatest, and in the array center the angle $a=0$. In this case, the angle C of the emission cone opening of the entire emitting unit (1), or the aperture, depends on the arrangement of the projectors (2). FIG. 6 shows an example of forming the angle C of the emission cone of the emitting unit (1). In this case the angle C is app. 90°, since the projectors (2) at the edges of the array are arranged at the angle $a=45°$. By analyzing an optical field formed in this way, an aerial vehicle can determine its dislocation in respect of the beacon.

At least two projectors (2) are required for carrying out the proposed invention, one of them may be arranged, for example, essentially in the center of the emitting unit (1) at an angle $a1 \approx 0°$, and the second one may be arranged at the periphery of the emitting unit (1) at an angle $a2$, where $a1 < a2$. It is also possible that two projectors are arranged symmetrically relative to the center of the emitting unit (1) at the same angles $a1 = a2$.

However, it is preferable that the number of the projectors is at least three. In such a case the projectors (2) are arranged symmetrically relative to the center of the emitting unit (1) at the same angles $a1=a2=a3$. More preferably, the number of the projectors is at least four, one of them being arranged essentially in the center of the emitting unit (1) at an angle $a1 \approx 0°$, and the second, third and fourth projectors are arranged at the periphery of the emitting unit (1) symmetrically relative to the central projector at angles $a2=a3=a4=a$, where $a1<a$. Still more preferably, the number of projectors is more than 4. A maximum number of the projectors is not limited and is decided upon by a device designer.

In a preferred embodiment of the invention, light emitting diodes are used as the projectors (2). It is well-known that a radiation pattern of a light emitting diode is not isotropic. An angle where emission intensity of a light emitting diode decreases to a half of the maximum, or a LED viewing angle, differs among light emitting diodes of different types. In order to form a continuous optical field, light emitting diodes in the emitting unit are arranged so that the viewing angles of the adjacent light emitting diodes overlap (FIG. 7).

In order to form a projector array, it is preferable to use similar projectors, i.e. those having essentially similar initial emission frequency and initial intensity for the whole array.

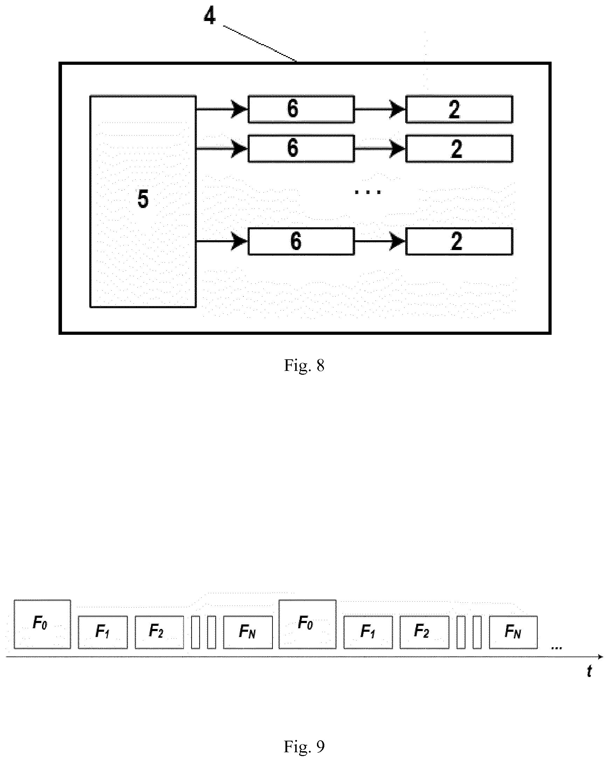

FIG. 8 shows the main components of a control unit (4) for the ground-based transmitting portion. The control unit (4) of the ground-based transmitting portion comprises a processor (5) and a plurality of drivers (6) for the projectors (2). The processor (5) is configured for forming control signals for the projectors (2). The processor (5) is configured for receiving control signals from outside. These may be, for example, instructions to turn on/off a projector for switching to the mode of reduced power consumption. Furthermore, the control unit may be provided with a memory module (not shown in the drawings) for storing data on what frequency is used for modulating a particular light source as well as data on each light source of the array of the emitting unit. In this case, the processor (5) requests data from the memory module for forming control signals for the projectors (2) and transmitting these control signals to the respective drivers (6).

The processor (5) modulates emission from each of the projectors (2) through the drivers (6). Any type of modulation may be employed (frequency, time or any other) that will enable to unambiguously identify a given projector (2) in the array of the emitting unit (1).

In a preferred embodiment of the invention, frequency-time modulation is employed.

In one embodiment of the invention, each of the drivers (6) controls frequency of only one projector (2) by one signal of the processor (5).

In another embodiment of the invention, each of the drivers (6) controls frequency of several projectors (2) by one signal of the processor (5). In this case, emission of these several projectors (2) is modulated in a similar way, and all these several projectors (2) emit essentially at the same frequency. This embodiment is preferable when it is necessary to improve emission visibility.

A person skilled in the art will understand that the narrower is the emission beam from a projector (2), the more such projectors (2) are required for forming a continuous optical field in space. The following examples may be presented.

Example 1.

The emitting unit is formed of 25 light emitting diodes. Each of these light emitting diodes has the LED viewing angle of 20 degrees. By arranging these 25 light emitting diodes in a 5x5 array with overlap of 10 degrees, Aperture C of the emitting unit of 40 degrees may be obtained. In order to identify all the light emitting diodes forming this array, 25 frequencies are required. If it is necessary to increase the aperture of the emitting unit to 80 degrees while using similar light emitting diodes, then a 9x9 LED array, i.e. 81 projector, is required. To identify all the light emitting diodes of this array, 81 frequencies will be required.

In order to increase a range of the transmitting portion, projectors, e.g., light emitting diodes, with smaller viewing angle but with higher emission density can be used. In this case it will be necessary to increase a number of the projectors (2) significantly. Consequently, a number of unique frequencies required will increase greatly, i.e. a spectrum of a signal transmitted will be expanded significantly. Such expansion of a spectrum may be inadmissible, since it will require making changes in the receiving portion.

In this case, the projectors may be divided into groups that will emit light alternately, and an emission frequency of each of the projectors (2) from a group will be unique for the projectors of this group only. Emission is generated by the groups in sequence and alternately, i.e. only one group of the projectors emits at a given time.

Example 2.

Let the emitting unit (1) comprise 50 light emitting diodes arranged in a 5x10 array. These light emitting diodes are divided into two groups, i.e. Group I and Group II, each comprising 25 light emitting diodes. To identify each of the 25 light emitting diodes in Group I, 25 unique frequencies in total are required for Group I. To identify each of the 25 light emitting diodes in Group II, the same 25 unique frequencies as for Group I may be used, provided Group I emits first, and then Group II.

Example 3.

Let the emitting unit (1) comprise 81 light emitting diodes arranged in a 9x9 array. In order an emission spectrum is composed of 22 unique frequencies, 81 light emitting diodes may be divided into 4 groups. The first, second and third groups will comprise 22 light emitting diodes each, and the fourth group will comprise 15 light emitting diodes. The groups emit alternately, one by one, from the first group to the last group, and then the cycle is repeated. Thus, 22 frequencies are required for unique identification of all the light emitting diodes of the emitting unit (1).

A solution whether the light sources should be divided into groups is to be taken at the step of designing the device.

In one embodiment of the invention, wherein all the projectors (2) are divided into groups, each of the drivers (6) controls frequency of only one projector (2) by one signal of the processor (5).

In another embodiment of the invention, wherein all the projectors (2) are divided into groups, each of the drivers (6) controls, by one signal of the processor (5), frequency of several projectors (2) relating to different groups. In this case, emission from these several projectors (2) relating to different groups is modulated similarly. Thus, all these several projectors (2) emit at one and the same frequency, but in sequence, in accordance with the order of emitting by the groups.

To identify each individual light source, it is necessary to determine compliance of a unique emission frequency of each individual projector (2) with a position of this projector (2) in the array. Furthermore, an angle *a* between the direction of emission maximum of each projector (2) and a normal to the main plane (3) of the emitting unit (1) should be determined in advance. In addition, initial intensity I of each projector (2) should be determined in advance. In the most preferred embodiment of the invention, all projectors (2) have similar emission intensity I. In the simplest embodiment all these data may be arranged as a correspondence table that may be stored in the memory module of the control unit (4). The same table may be also stored in the receiving portion of the system.

In one embodiment of the claimed invention, a frequency for each of the projectors (2) may be assigned at random, according to the technical features of the equipment. Then a totality of data required for identifying a particular projector (2) may be represented as a table, for example of the following form, where: n - number of a projector (2), n having values in the range from 1 to N, *a* - angle, as described above, w - a unique frequency:

| n | *a*, degrees | w, KHz | I |
|---|---|---|---|
| 1 | 30 | 10 | 1 |
| 2 | 45 | 15 | 1 |
| ... | | | ... |
| N | 0 | 40 | 1 |

However, such a table may be inconvenient, since it requires a rather big volume of memory. Formation of such a table also requires certain resources.

Therefore, in another embodiment of the claimed invention, a unique frequency is assigned to each projector (2), depending on the number of that projector (2) in the array. Then, a totality of data required for identifying a particular projector (2) will be represented as a table of correspondence between the number of a projector (2), a corresponding angle *a* and initial intensity I, as well according to the formula w2=w+n*k, where: w2 - a unique modulation frequency of emission of a given projector (2), w - an initial frequency of emission of that projector (2), n - the number of the projector (2) in the array k - a constant coefficient. A frequency may be assigned according to any other law convenient for the designer.

In one embodiment of the claimed invention a unique frequency is assigned to each projector (2) from a group of the projectors (2), frequencies being repeated for the projectors (2) from different groups.

Example 4.

Let the emitting unit (1) comprise 16 light emitting diodes divided into 4 groups. Then, a totality of data required for identifying a particular projector (2) will include the number of the group, the number of the projector (2) in the group, the angle *a* for each projector (2), the emission frequency of that projector (2) in the group.

Furthermore, the correspondence table in the first case and the formula defining relation between the number of the projector (2) and the frequency in the second case may be supplemented with data about a coordinate of each projector (2) relative to the center of the array of the emitting unit (1).

The processor (5) is configured for specifying a modulation frequency and a modulation duration for each of the projectors (2) in the array.

In one embodiment of the invention, the processor (5) initiates light emission by all the projectors (2) simultaneously, the emission frequency of each projector from the plurality of projectors (2) being unique for all the other projectors (2).

In yet another embodiment of the invention, the processor (5) initiates emission by the projectors (2) in groups in the following way (FIG. 9):

- the processor (5) initiates emission $F_0$ of all the groups of projectors (2) simultaneously at the same frequency by forming the start signal, said emission lasting for a predetermined time t;
- after the time t expires, the processor (5) will initiate emission $F_1$ of one of the groups of projectors (2) for the time t, for example by the first group in the N groups of the projectors (2);
- after the time t expires, the processor (5) will initiate emission $F_2$ of a next one group of the groups of projectors (2), which is different from the first group, for example by the second group, for the time t;

- after the time t expires, the processor (5) will initiate emission of a next group of the groups of the projectors (2) for the time t, and the procedure is repeated for all the groups sequentially, until emission $F_N$ of the last, $N^{th}$, group will be initiated. Thereafter, the processor (5) once again initiates emission $F_0$ of all the groups at the same frequency simultaneously by forming the start signal, and the whole process is repeated.

The start signal may be a data transmission frame employing FSK-modulation for encoding a data flow at a specially assigned frequencies. The start signal may be a data transmission frame employing any other modulation method that will enable to unambiguously identify the start of transmission. For example, a modulation method may be similar to that under the RC5 Protocol. A data transmission frame of the start signal may comprise additional information on the transmitting portion, e.g. a unique number of the beacon, information on a spatial orientation of the beacon (a tilt angle of the projector main plane relative to the landing pad plane, etc.).

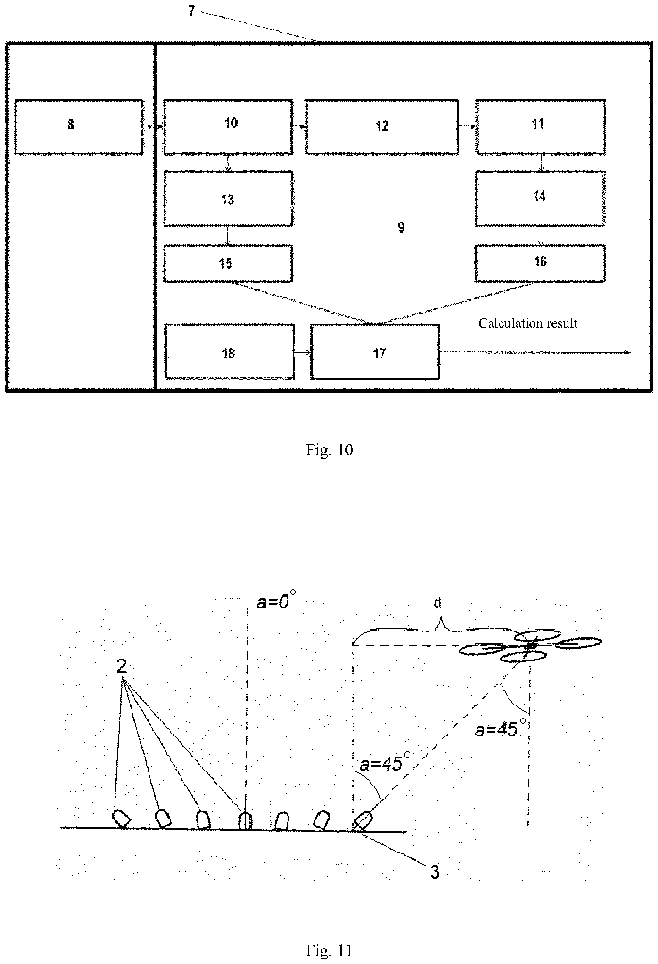

FIG. 10 shows the main components of the system receiving portion (7). The receiving portion (7) is arranged onboard an aerial vehicle. The receiving portion (7) comprises a light sensor (8) and a data processing unit (9).

The light sensor (8) is a photodiode.

The data processing unit (9) comprises a first amplifier stage (10), a second amplifier stage (11), a high-pass filter (12), low-pass filters (13) and (14), analog-to-digital converters (15) and (16), a processor (17) for digital processing of signals, a memory module (18).

A signal of the illuminance, which is registered by the light sensor (8), is directed to the first amplifier stage (10). The first amplifier stage (10) is used for pre-amplification of a signal, in order to ensure matching between the subsequent devices and the light sensor (8).

The high-pass filter (12) enables to eliminate a constant component of a signal, e.g. sunlight or another background low-frequency radiation.

The second amplifier stage (11) is provided for obtaining a desired signal if the initial signal is characterized by weak power.

The low-pass filters (13) and (14) remove noises which frequency is higher than the system operating range from a signal.

The analog-to-digital converters (15) and (16) transform analog signals, which are pre-processed by the amplifiers (10) and (11) and the filters (12), (13), and (14), to digital signals for directing them to the processor (17) for digital processing of signals.

The first amplifier stage (10), the first low-pass filter (13) and the first analog-to-digital converter (15) form the first channel of pre-processing.

The high-pass filter (12), the second amplifier stage (11), the second low-pass filter (14) and the second analog-to-digital converter (16) form the second channel of pre-processing.

These two pre-processing channels enable to expand a dynamic range of received emission significantly and remove noise from a signal efficiently. This enables to increase the system operating range and reliability even if received emission has low intensity.

The processor (17) for digital processing of signals is configured for analyzing and processing data received from the first and second pre-processing channels.

The memory module (18) is configured for storing a data totality necessary for identifying any of the projectors (2). This data is entered into the memory module (18) in the step of setting up the system receiving portion. This data comprises, at least: the number n of each projector (2); the angle $a$ between the maximum emission direction of each projector (2) and a normal to the main plane (3) of the emitting unit (1); the emission frequency w of each projector (2); the initial power I of each projector (2). A totality of these data may be stored both in the form of the correspondence table, and in the form of the formula, as described above. Furthermore, the correspondence table in the first case and the formula defining relation between the light source number and frequency in the second case may be supplemented with data about a coordinate of each projector (2) relative to the center of the array of the emitting unit (1).

The processor (17) for digital processing of signals analyzes data as follows:

a) receives signals from the two pre-processing channels simultaneously,

b) determines an input signal spectrum and intensity E of each frequency component for each of the pre-processing channels;

c) determines the most intensive one among the registered frequency components of the illuminance and its intensity value Emax; and, if an amplitude of the most intensive frequency component of the illuminance exceeds a predetermined threshold value of the signal-to-noise ratio, then the pre-processing channel providing this signal is selected for further analyzing signals for a time period during which signals from all the projectors (2) or, in case when the projectors (2) are divided into groups, from all the groups will be received by the receiving portion;

d) identifies a particular projector (2) corresponding to the most intensive frequency component Emax;

e) determines a distance r to that projector (2) by employing an illumination intensity formula;

f) determines dislocation d of the receiving portion from the normal to the main plane (3) of the emitting unit (1), which is reconstructed in the point of installation of that projector (2), on the basis of the distance r to that projector (2) and the angle $a$ of that projector (2);

g) transmits the dislocation $d,$ as determined in step f), to means for controlling the AV position for adjusting the AV position by the distance corresponding to the dislocation *d.*

The system can be operated as follows.

An aerial vehicle equipped with the receiving portion, is directed to the place of landing. The transmitting portion, i.e. a beacon comprising an array of projectors (2), is situated on the landing site, as described above. The array of the projectors (2) forms an emission field in space, the emission frequency of the projectors (2), emitting during a given period of time, being unique.

When the light sensor (8) of the receiving portion enters the emission field it detects emission from at least a part of the projectors (2) emitting at that time.

This emission is sensed by the light sensor (8) and then is directed through the first and second pre-processing channels to the processor (17) for digital processing of signals.

After receiving the signal from both channels, the processor (17) for digital processing of signals decomposes the signal thus received into a spectrum, e.g. by means of the fast Fourier transform - FFT). The obtained spectrum reflects a set of frequencies present in the signal as well as emission intensity at each from that set of frequencies.

After that, the processor (17) determines intensities of all frequency components of the signal and selects a component having the greatest intensity. If an amplitude of the most intensive signal exceeds a predetermined threshold value of the signal-to-noise ratio, then the processor selects the pre-processing channel providing that signal for analyzing future signals. The selected pre-processing channel will be preferable for the time period during which signals from all the projectors (2) or groups of the projectors (2), if the projectors (2) are divided into groups, will be received by the receiving portion.

Then, the processor (17), having determined the frequency of the most intensive signal, refers to the memory module (18) and determines, according to the correspondence table or the formula, the projector (2) this frequency corresponds to. Thereby the projector (2) that emits the signal with the most intensity is determined. Moreover, the processor (17) according to the correspondence table or the formula determines the parameters of the projector (2) emitting the most intensive signal. These parameters may include: the number of the projector (2); the angle *a* between the direction of the emission maximum of this projector (2) and a normal to the main plane (3) of the emitting unit (1); initial intensity I of the projector (2). Thereby the following set of data is obtained: maximum emission intensity; the frequency of this maximum emission intensity; the number of the projector (2) with the most intensive emission; angle *a* between the direction of the emission maximum of this projector (2) and a normal to the main plane (3) of the emitting unit (1); initial intensity I of the projector (2).

This projector (2) is taken for the most precisely directed towards the light sensor (8).

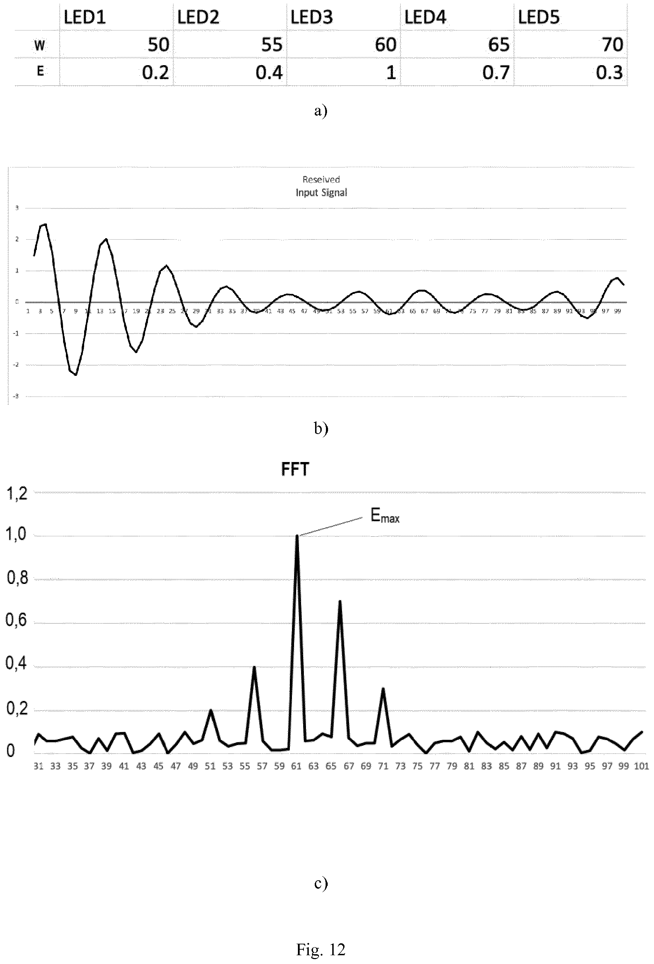

The determination of the most precisely directed projector can be best illustrated with the following Example (FIG. 12).

Example 5.

Let a group of light emitting diodes consist of 5 light emitting diodes (FIG. 12a). When the light sensor enters the emission area of this group, it registers a signal that will comprise signals from each of the light emitting diodes in the group as well as background emission and noise (FIG. 12b). After the data processing unit transforms the signal, e.g. by employing the fast Fourier transform, an emission spectrum will be received that will comprise frequency and amplitude characteristics of the signal received (FIG. 12c).

A spectrum analysis enables to calculate that in this case the most precisely directed LED is LED3 that emits at the frequency 60, its emission intensity, as taken by the light sensor, being 1.

Then, the processor (17) determines a distance to that light emitting element according to the known illumination intensity formula:

$$E = \frac{I}{r^2} \cdot \cos a$$

from which

$$r = \sqrt{\frac{I \cdot \cos a}{E}}$$

Here, E=Emax is intensity of the most intensive component of the signal of the illuminance received by the light sensor (8).

The angle *a* means an angle at which the light sensor "views" this projector (2). Obviously, this angle is equal to the angle *a* between the direction of the emission maximum of this projector (2) and a normal to the main plane (3) of the emitting unit (1), as shown in FIG. 11.

Intensity I is initial emission intensity of this projector.

After that, the processor (17) determines dislocation *d* from the normal reconstructed to the location point of this light emitting element according to the formula:

$$d = r \cdot \sin a = \sin a \cdot \sqrt{\frac{I \cdot \cos a}{E}}$$

After obtaining a dislocation value, the processor (17) transmits this value to the means of controlling the AV position. The aerial vehicle moves by the distance d toward the beacon center and lands.

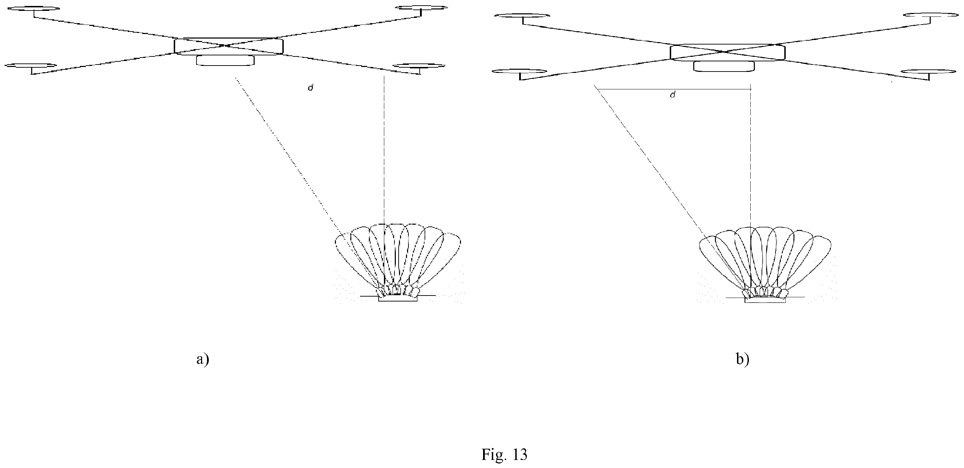

If the aerial vehicle dimensions are significantly greater than those of the beacon, then a single procedure of determination of displacement is sufficient for the aerial vehicle to be positioned precisely above the beacon and land accurately (FIGs. 13a, 13b).

However, if accuracy achieved after one iteration is insufficient, the next steps on determining dislocation may be performed.

After the aerial vehicle moves to the distance *d,* the light sensor (8) transmits a signal to the data processing unit (9) once again, and the whole procedure is repeated. After the second iteration, the aerial vehicle moves still closer to the beacon center. And at last, after a number of iterations a situation occurs when the most precisely directed projector is the one that is the closest to the beacon geometrical center, and the aerial vehicle may land accurately.

**Claims**

1. A method for ensuring precision landing of an aerial vehicle, equipped with a receiving portion, on a landing site, equipped with a transmitting portion, wherein:

   a) an emission by at least two projectors (2) of an emitting unit (1) of a transmitting portion is initiated;
   b) a signal comprising emission of the projectors (2) is registered by means of a light sensor (8) of a receiving portion (7);
   c) a spectrum of the registered signal is analyzed by means of a data processing unit (9) of the receiving portion (7) in order to ensure determination of the most precisely directed projector (2) among the projectors (2);

   the method **characterised in** comprising step d), wherein:
   d) a dislocation of the receiving portion (7) relative to the most precisely directed projector (2) of the emitting unit (1) of the transmitting portion is calculated according to the formula:

$$d = \sqrt{\frac{I \cdot \cos a}{E}} \cdot \sin a,$$

   where:

   I - known intensity of the most precisely directed projector (2);
   E - registered intensity of the most precisely directed projector (2);
   a - an angle between a direction of an emission intensity maximum from the most precisely directed projector (2) and a normal to the main plane (3) of the emitting unit (1).

2. The method according to Claim 1, wherein emission of each of the projectors (2) is modulated so that at any given time all the projectors (2) of the emitting unit (1) emit, and a frequency of each of the projectors (2) is unique.

3. The method according to Claim 1, wherein the projectors (2) are divided into at least two groups, and emission of each of the projectors (2) is modulated so that an emission frequency of each of the projectors (2) is unique for the projectors (2) of a given group, and at any given time only one group emits, the groups emitting alternately, from the first one to the last one, and this sequence is repeated cyclically.

4. The method according to Claim 3, wherein before initiation of emission of the first group of the projectors (2) said emission of all the projectors (2) is modulated so that for a predetermined time all the projectors (2) emit at a single frequency and form a start frame.

5. A system for ensuring precision landing of an aerial vehicle on a landing site, comprising a transmitting portion configured to be placed on said landing site and a receiving portion configured to be placed on said aerial vehicle, wherein:
   the transmitting portion comprises:

   an emitting unit (1) comprising at least two projectors (2) arranged so that a direction of an emission intensity maximum of a given projector (2) and a normal to a main plane (3) of the emitting unit (1) forms an angle a, said angle *a* increases toward the periphery of the emitting unit (1), and
   a control unit (4) comprising a processor (5) and a plurality of drivers (6) of the projectors (2), the processor (5) being configured for performing frequency-time modulation of emission by the projectors (2) by means of forming signals for controlling the projectors (2) and sending said signals to the projectors (2) through the corresponding drivers (6);
   the receiving portion comprises:

   a light sensor (8) configured for registering a signal provided by the emitting unit (1), and a data processing unit (9) configured for analyzing a spectrum of a signal registered by the light sensor (8) as well as determining a most precisely directed projector (2),
**characterised in that:**
the data processing unit (9) is configured for determining dislocation *d* of the receiving portion relative to the most precisely directed projector (2) according to the following formula:

$$d = \sin a \cdot \sqrt{\frac{I \cdot \cos a}{E}},$$

where:

I - a known emission intensity of the most precisely directed projector (2);
E - a registered intensity of the most precisely directed projector (2),
*a* - an angle between a direction of emission intensity maximum of the most precisely directed projector (2) and a normal to the main plane (3) of the emitting unit (1).

6. A system according to Claim 5, **characterized in that** the data processing unit (9) comprises a first amplifier stage (10), a second amplifier stage (11), a high-pass filter (12), low-pass filters (13, 14), analog-to-digital converters (15, 16), a processor (17) for digital processing of signals, and a memory module (18).

**Patentansprüche**

1. Verfahren zum Sicherstellen einer Präzisionslandung eines Luftfahrzeugs, das mit einem Empfangsteil ausgestattet ist, auf einem Landeplatz, der mit einem Sendeteil ausgestattet ist, wobei:

a) eine Emission durch mindestens zwei Projektoren (2) einer Emissionseinheit (1) eines Sendeteils gestartet wird;
b) ein Signal, das die Emission der Projektoren (2) enthält, mit Hilfe eines Lichtsensors (8) eines Empfangsteils (7) registriert wird;
c) ein Spektrum des registrierten Signals unter Verwendung einer Datenverarbeitungseinheit (9) des Empfangsteils (7) analysiert wird, um die Bestimmung des am genauesten gerichteten Projektors (2) unter den Projektoren (2) sicherzustellen,

wobei das Verfahren **dadurch gekennzeichnet ist, dass** es einen Schritt d) aufweist, wobei:
d) ein Versatz des Empfangsteils (7) relativ zu dem am genauesten gerichteten Projektor (2) der Emissionseinheit (1) des Sendeteils gemäß der Formel:

$$d = \sqrt{\frac{I \cdot \cos a}{E}} \cdot \sin a$$

berechnet wird,
wobei:

I: bekannte Emissionsintensität des am genauesten gerichteten Projektors (2);
E: registrierte Intensität des am genauesten gerichteten Projektors (2);
a: Winkel zwischen einer Richtung eines Emissionsintensitätsmaximums des am genauesten gerichteten Projektors (2) und einer Normalen zur Hauptebene (3) der Emissionseinheit (1).

2. Verfahren nach Anspruch 1, wobei die Emission jedes der Projektoren (2) derart moduliert wird, dass zu jedem vorgegebenen Zeitpunkt alle Projektoren (2) der Emissionseinheit (1) emittieren und eine Frequenz jedes der Projektoren (2) spezifisch ist.

3. Verfahren nach Anspruch 1, wobei die Projektoren (2) in mindestens zwei Gruppen unterteilt sind und die Emission jedes der Projektoren (2) derart moduliert wird, dass eine Emissionsfrequenz jedes der Projektoren (2) für die Projektoren (2) einer vorgegebenen Gruppe spezifisch ist, und zu jedem vorgegebenen Zeitpunkt nur eine Gruppe emittiert, wobei die Gruppen abwechselnd von der ersten bis zur letzten emittieren und diese Folge zyklisch wiederholt wird.

4. Verfahren nach Anspruch 3, wobei vor dem Starten der Emission der ersten Gruppe der Projektoren (2) die Emission aller Projektoren (2) derart moduliert wird, dass während einer vorgegebenen Zeit alle Projektoren (2) mit einer einzigen Frequenz emittieren und einen Startrahmen bilden.

5. System zum Sicherstellen einer Präzisionslandung eines Luftfahrzeugs auf einem Landeplatz, das ein Sendeteil, das dafür konfiguriert ist, auf dem Landeplatz platziert zu werden, und ein Empfangsteil aufweist, das dafür konfiguriert ist, auf dem Luftfahrzeug platziert zu werden, wobei:
das Sendeteil aufweist:

eine Emissionseinheit (1), die mindestens zwei Projektoren (2) aufweist, die derart angeordnet sind, dass eine Richtung eines Emissionsintensitätsmaximums eines vorgegebenen Projektors (2) und eine Normale zu einer Hauptebene (3) der Emissionseinheit (1) einen Winkel a bilden, wobei der Winkel a in Richtung zum Umfang der Emissionseinheit (1) zunimmt; und eine Steuereinheit (4), die einen Prozessor (5) und eine Vielzahl von Treibern (6) der Projektoren aufweist, wobei der Prozessor (5) dafür konfiguriert ist, eine Frequenz-Zeit-Modulation der Emission durch die Projektoren (2) mittels der Bildung von Signalen zum Steuern der Projektoren (2) und Übertragen der Signale über die entsprechenden Treiber an die Projektoren (2) auszuführen,

wobei das Empfangsteil aufweist:

einen Lichtsensor (8), der dafür konfiguriert ist, ein durch die Emissionseinheit (1) bereitgestelltes Signal zu registrieren, und eine Datenverarbeitungseinheit (9), die dafür konfiguriert ist, ein Spektrum eines durch den Lichtsensor (8) registrierten Signals zu analysieren und einen am genauesten gerichteten Projektor (2) zu bestimmen, **dadurch gekennzeichnet, dass**:

die Datenverarbeitungseinheit (9) dafür konfiguriert ist einen Versatz d des Empfangsteils relativ zu dem am genauesten gerichteten Projektor (2) gemäß der folgenden Formel zu bestimmen:

$$d = \sqrt{\frac{I \cdot \cos a}{E}} \cdot \sin a,$$

wobei:

I: bekannte Emissionsintensität des am genauesten gerichteten Projektors (2); E: registrierte Intensität des am genauesten gerichteten Projektors (2); a: Winkel zwischen einer Richtung eines Emissionsintensitätsmaximums des am genauesten gerichteten Projektors (2) und einer Normalen zur Hauptebene (3) der Emissionseinheit (1).

6. System nach Anspruch 5, **dadurch gekennzeichnet, dass** die Datenverarbeitungseinheit (9) eine erste Verstärkerstufe (10), eine zweite Verstärkerstufe (11), ein Hochpassfilter (12), Tiefpassfilter (13, 14), Analog-Digital-Wandler (15, 16), einen Prozessor (17) zur digitalen Verarbeitung von Signalen und ein Speichermodul (18) aufweist.

## Revendications

1. Procédé permettant d'assurer la précision d'un atterrissage d'un véhicule aérien, équipé d'une partie de réception, sur un site d'atterrissage, équipé d'une partie transmission, dans lequel :

a) une émission par au moins deux projecteurs (2) d'une unité d'émission (1) d'une partie de transmission est lancée ; b) un signal comprenant l'émission des deux projecteurs (2) est enregistré au moyen d'un photodétecteur (8) d'une partie de réception (7) ; c) un spectre du signal enregistré est analysé au moyen d'une unité de traitement de données (9) de la partie de réception (7) afin d'assurer la détermination du projecteur (2) le plus précisément orienté parmi les projecteurs (2) ;

le procédé étant **caractérisé** comme comprenant l'étape d), dans lequel :

d) une dislocation de la partie de réception (7) par rapport au projecteur (2) le plus précisément orienté de l'unité d'émission (1) de la partie de transmission est calculée selon la formule :

$$d = \sqrt{\frac{I \cdot \cos a}{E}} \cdot \sin a,$$

où :

I - intensité connue du projecteur (2) le plus précisément orienté ; E - intensité enregistrée du projecteur (2) le plus précisément orienté ; a - un angle entre une direction d'un maximum d'intensité d'émission provenant du projecteur (2) le plus précisément orienté et une normale au plan principal (3) de l'unité d'émission (1).

2. Procédé selon la revendication 1, dans lequel l'émission de chacun des projecteurs (2) est modulée de sorte qu'à n'importe quel moment tous les projecteurs (2) de l'unité d'émission (1) émettent et une fréquence de chacun des projecteurs (2) est unique.

3. Procédé selon la revendication 1, dans lequel les projecteurs (2) sont divisés en au moins deux groupes et l'émission de chacun des projecteurs (2) est modulée de sorte qu'une fréquence d'émission de chacun des projecteurs (2) est unique pour les projecteurs (2) d'un groupe donné, et à n'importe quel moment un seul groupe émet, les groupes émettant alternativement à partir du premier jusqu'au dernier et cette séquence est répétée de manière cyclique.

**4.** Procédé selon la revendication 3, dans lequel, avant le lancement de l'émission du premier groupe de projecteurs (2), ladite émission de tous les projecteurs (2) est modulée de sorte que, pendant un temps prédéterminé, tous les projecteurs (2) émettent à une seule fréquence et forment un cadre de départ.

**5.** Système permettant d'assurer la précision d'un atterrissage d'un véhicule aérien sur un site d'atterrissage comprenant une partie de transmission conçue pour être placée sur ledit site d'atterrissage et une partie de réception conçue pour être placée sur ledit véhicule aérien, dans lequel :

la partie de transmission comprend :

une unité d'émission (1) comprenant au moins deux projecteurs (2) agencés de sorte qu'une direction d'un maximum d'intensité d'émission d'un projecteur (2) donné et une normale par rapport à un plan principal (3) de l'unité d'émission (1) forment un angle a, ledit angle *a* augmente vers la périphérie de l'unité d'émission (1), et une unité de commande (4) comprenant un processeur (5) et une pluralité de pilotes (6) des projecteurs (2), le processeur (5) étant conçu pour effectuer une modulation fréquence-temps d'émission par les projecteurs (2) au moyen de la formation de signaux pour commander les projecteurs (2) et envoyer lesdits signaux vers les projecteurs (2) par les pilotes (6) correspondants ;

la partie de réception comprend :
un photodétecteur (8) conçu pour enregistrer un signal fourni par l'unité d'émission (1) et une unité de traitement de données (9) conçue pour analyser un spectre d'un signal enregistré par le photodétecteur (8) ainsi que la détermination du projecteur (2) le plus précisément orienté,

**caractérisé en ce que :**
l'unité de traitement de données (9) est conçue pour déterminer une dislocation *d* de la partie de réception par rapport au projecteur (2) le plus précisément orienté selon la formule suivante :

$$d = \sin a \cdot \sqrt{\frac{I \cdot \cos a}{E}},$$

où :

I - intensité connue du projecteur (2) le plus précisément orienté ;
E - intensité enregistrée du projecteur (2) le plus précisément orienté ;
*a* - angle entre une direction d'un maximum d'intensité d'émission provenant du projecteur (2) le plus précisément orienté et une normale au plan principal (3) de l'unité d'émission (1).

**6.** Système selon la revendication 5, **caractérisé en ce que** l'unité de traitement de données (9) comprend un premier stade d'amplification (10), un second stade d'amplification (11), un filtre passe-haut (12), des filtres passe-bas (13, 14), des convertisseurs analogique - numérique (15, 16), un processeur (17) pour le traitement de signaux et un module de mémoire (18).

**1**

**2**

**3**

Fig. 1

**2**

**3**

y

Fig. 2

**2**

**2**

Fig. 3

Fig. 4

Fig. 5

C = 90°

2

a=0°

a=45°

3

Fig. 6

2

2

Fig. 7

Fig. 8

Fig. 9

Fig. 10

Fig. 11

| | LED1 | LED2 | LED3 | LED4 | LED5 |
|---|---|---|---|---|---|
| W | 50 | 55 | 60 | 65 | 70 |
| E | 0.2 | 0.4 | 1 | 0.7 | 0.3 |

a)

b)

c)

Fig. 12

$d$

a)                                                                    b)

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7039506 B
- US 9904283 B

- US 3510834 A
- US 2019141660 A1

### Non-patent literature cited in the description

- Automatic Take Off, Tracking and Landing of a Miniature UAV on a Moving Carrier Vehicle. **KARL ENGELBERT WENZEL et al.** JOURNAL OF INTELLIGENT AND ROBOTIC SYSTEMS; THEORY AND APPLICATIONS - (INCORPORATING MECHATRONIC SYSTEMS ENGINEERING). KLUWER ACADEMIC PUBLISHERS, 23 October 2010, vol. 61, 221-238